Europäisches Patentamt

European Patent Office

Office européen des brevets

(19)

(11) Veröffentlichungsnummer: **0 391 889**
**A1**

## (12) EUROPÄISCHE PATENTANMELDUNG

(21) Anmeldenummer: **90890105.1**

(22) Anmeldetag: **05.04.90**

(51) Int. Cl.5: **A01G 25/09**

(30) Priorität: **05.04.89 AT 799/89**

(43) Veröffentlichungstag der Anmeldung:
**10.10.90 Patentblatt 90/41**

(84) Benannte Vertragsstaaten:
**BE DE DK ES FR GB GR IT NL**

(71) Anmelder: **Röhren- und Pumpenwerk Rudolf Bauer Aktiengesellschaft**

**A-8570 Voitsberg, Steiermark(AT)**

(72) Erfinder: **Seebacher, Franz**
**Nepomukgasse 16**
**A-8045 Graz(AT)**
Erfinder: **Schibranji, Hermann**
**Rainweg 8**
**A-8570 Voitsberg(AT)**

(74) Vertreter: **Piso, Eberhard, Dr.**
**Patentanwälte Dipl.-Ing. Herbert C.E. Krause**
**Dr. Eberhard Piso Gluckgasse 1 Postfach 328**
**A-1015 Wien 1(AT)**

(54) **Auslegersystem zum Bewässern grosser Flächen.**

(57) Auslegersystem zum Bewässern großer Flächen, mit einem fahrbaren, mit einer Wasserzuleitung versehenen Wagen oder Stativ und einer Trägereinrichtung für den Ausleger, wobei die Trägereinrichtung einen auf dem Wagen (1) oder Stativ in Fahrtrichtung schwenkbar angeordneten Steher (3) und einen mit diesem verbundenen, an den Mittelteil (6) des Auslegers anschließbaren Galgen (4, 5) umfaßt, die Trägereinrichtung aus Hohlprofilen zur Wasserführung besteht, der Galgen (4, 5) mit dem Steher (3) gelenkig um dessen Achse drehbar verbunden und zweiteilig ausgeführt ist und einen in Fahrtrichtung nach oben gerichteten, um die Achse des Stehers drehbaren ersten Teil (4) und einen mit diesem gelenkig verbundenen, zum Boden weisenden zweiten Teil (5) umfaßt, der Ausleger, wie an sich bekannt, aus mehreren untereinander verbundenen, Regnerdüsen tragenden Teilabschnitten besteht, die Teilabschnitte miteinander und mit dem Mittelteil (6) über Schnellkupplungen verbunden sind, und jeder Teilabschnitt (7) mit einem in Arbeitsstellung nach oben weisenden, in Richtung der Auslegerachse umklappbaren Druckstab (12) versehen ist, der zur Aufnahme von Spannelementen (16) des Auslegers dient.

FIG. 1a

Die Erfindung betrifft ein Auslegersystem zum Bewässern großer Flächen,mit einem fahrbaren, mit einer Wasserzuleitung versehenen Wagen oder Stativ und einer Trägereinrichtung für den Ausleger.

Derartige Bewässerungssysteme benötigen im allgemeinen einen hohen Arbeits- und Zeitaufwand zu ihren Zusammenbau und sind auf Grund ihrer Sperrigkeit schwierig zu transportieren. Es sind Beregnungssysteme bekannt, bei welchen die einzelnen Abschnitte des Auslegers zum Transport des Systems ineinander geschoben werden können. Dieser Vorgang ist jedoch vor allem bei Erreichen der inneren Abschnitte, d.h. wenn bereits mehrere Abschnitte ineinander geschoben sind, sehr kraftaufwendig.

Weiters sind Sprühausleger, wie beispielsweise in der DE-OS 1 782 190 beschrieben, bekannt, welche an einem Traktor oder einem landwirtschaftlichen Fahrzeug befestigt sind. Aufgabe der Erfindung ist es, ein Auslegersystem zu schaffen, welches die oben genannten Nachteile beseitigt und in seinen Einsatzmöglichkeiten durch eine Höhenverstellbarkeit erweitert ist.

Die Erfindung löst die Aufgabe dadurch, daß die Trägereinrichtung einen auf dem Wagen oder Stativ in Fahrtrichtung schwenkbar angeordneten Steher und einen mit diesem verbundenen, an den Mittelteil des Auslegers anschließbaren Galgen umfaßt, daß die Trägereinrichtung aus Hohlprofilen zur Wasserführung besteht, daß der Galgen mit dem Steher gelenkig um dessen Achse drehbar verbunden ist, daß der Galgen zweiteilig ausgeführt ist und einen in Fahrtrichtung nach oben gerichteten, um die Achse des Stehers drehbaren ersten Teil und einen mit diesem gelenkig verbundenen, zum Boden weisenden zweiten Teil umfaßt, daß der Ausleger, wie an sich bekannt, aus mehreren untereinander verbundenen, Regnerdüsen tragenden Teilabschnitten besteht, daß die Teilabschnitte miteinander und mit dem Mittelteil über Schnellkupplungen verbunden sind, und daß jeder Rohrabschnitt mit einem in Arbeitsstellung nach oben weisenden, in Richtung der Auslegerachse umklappbaren Druckstab versehen ist, der zur Aufnahme von Spannelementen des Auslegers dient.

Ein anderes Merkmal der Erfindung ist es, daß der Mittelteil des Auslegers aus einem an den Galgen ankuppelbaren, wasserführenden, senkrechten Rohr und einem mit diesem verbundenen, und zu beiden Seiten senkrecht dazu verlaufenden, wasserführenden Teilabschnitt besteht.

Ein anderes, weiteres Merkmal der Erfindung ist es, daß jeder Teilabschnitt mit zwei unterhalb und seitlich zu ihm verlaufenden Fachwerkstäben über Verstrebungen verbunden ist, wodurch ein dreieckförmiges Fachwerk gebildet ist. Ein anderes Merkmal der Erfindung ist es, daß der Mittelteil an seinen beiden horizontal liegenden Enden mit je einer Schnellkupplung und je einem an der Oberseite des Fachwerks angeordneten, in Achsrichtung des Auslegers kippbaren Druckstäben versehen ist.

Ein weiteres Merkmal der Erfindung ist es, daß jeder Druckstab eines Teilabschnittes mit seinen benachbarten Druckstäben und mit dem äußeren Endabschnitt des nächsten äußeren Teilabschnittes durch Spannelemente verspannt ist.

Ein weiteres, anderes Merkmal der Erfindung ist es, daß das senkrechte Rohr des Mittelteils im Bereich des Galgens mit den beiden äußeren Enden dés Mittelteils und mit den oberen Enden der Druckstäbe verspannt ist.

Ein anderes Merkmal der Erfindung ist es, daß die Spannelemente Seile sind.

Ein anderes Merkmal der Erfindung ist es, daß die Spannelemente Zugstangen aus Kunststoff sind.

Ein weiteres Merkmal der Erfindung ist es, daß jeder Fachwerkstab an jedem Ende mit einem Haken versehen ist.

Ein anderes, weiteres Merkmal der Erfindung ist es, daß jeder Druckstab in seinem am wasserführenden Rohr angeordneten, kippbaren Bereich mit einem Haken und in seinem oberen Bereich mit einem zur Mitte des Auslegers und nach oben weisenden Haken und einem zum Rand des Auslegers zeigenden, zwei Ösen aufweisenden Teil zur Aufnahme der Spannelemente versehen ist.

Ein anderes, weiteres Merkmal der Erfindung ist es, daß der Steher über eine Seilkonstruktion mittels einer Seilwinde kippbar ist.

Ein anderes Merkmal der Erfindung ist es, daß zwischen dem Steher und dem fahrbaren Wagen eine Hydraulikanordnung vorgesehen ist.

Ein weiteres Merkmal der Erfindung ist es, daß die Seilwinde am fahrbaren Wagen angeordnet ist.

Ein abschließendes Merkmal der Erfindung ist es, daß die Abschnitte des zerlegten Auslegers zum Transport im Bereich des Mittelteils in einer dichten Packung anordenbar sind.

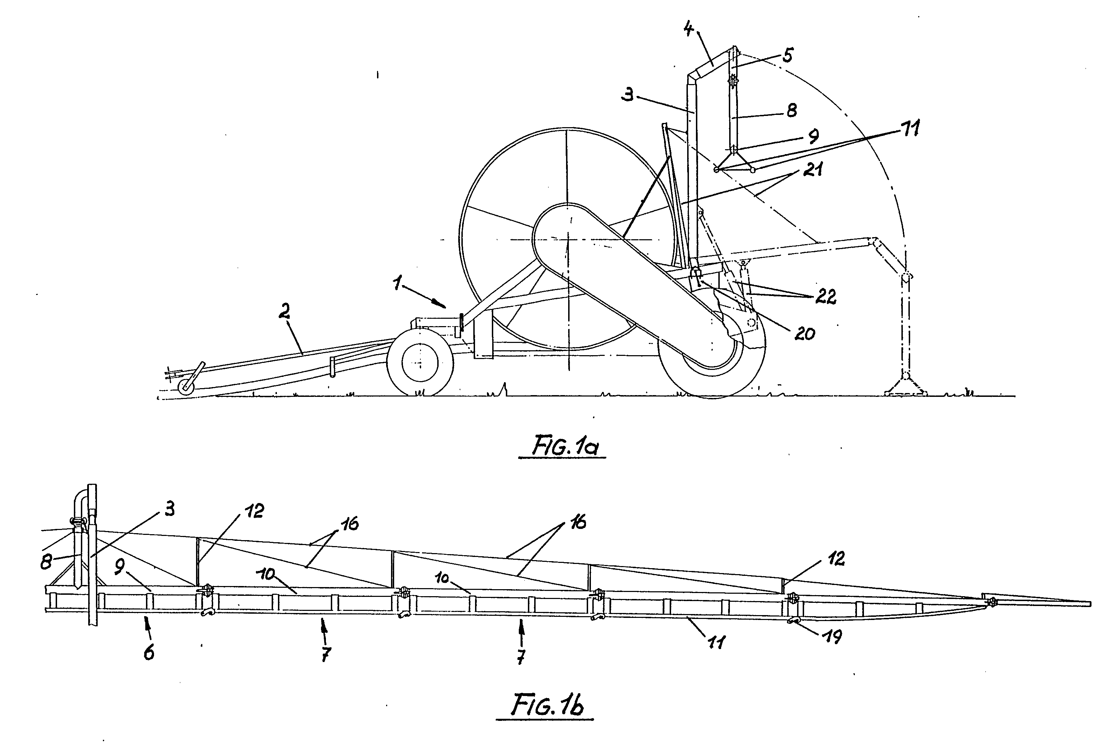

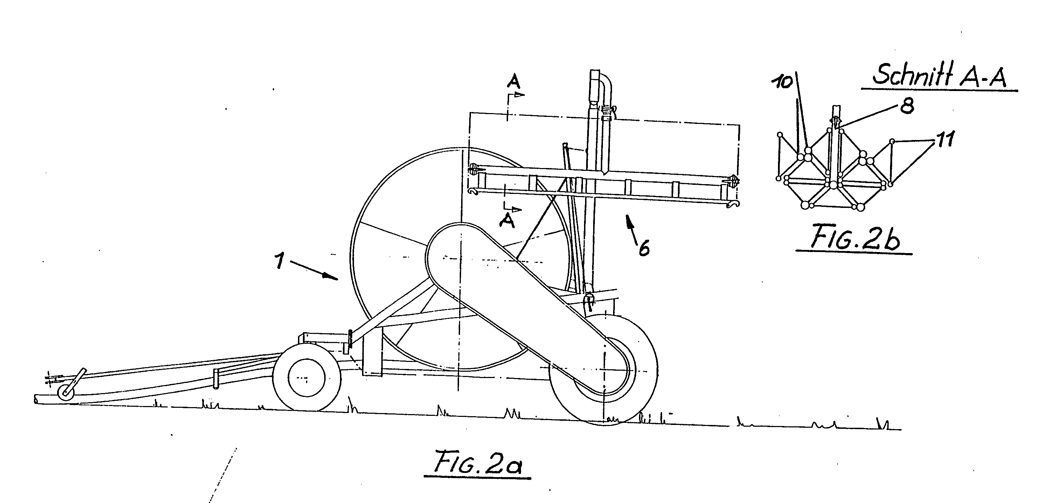

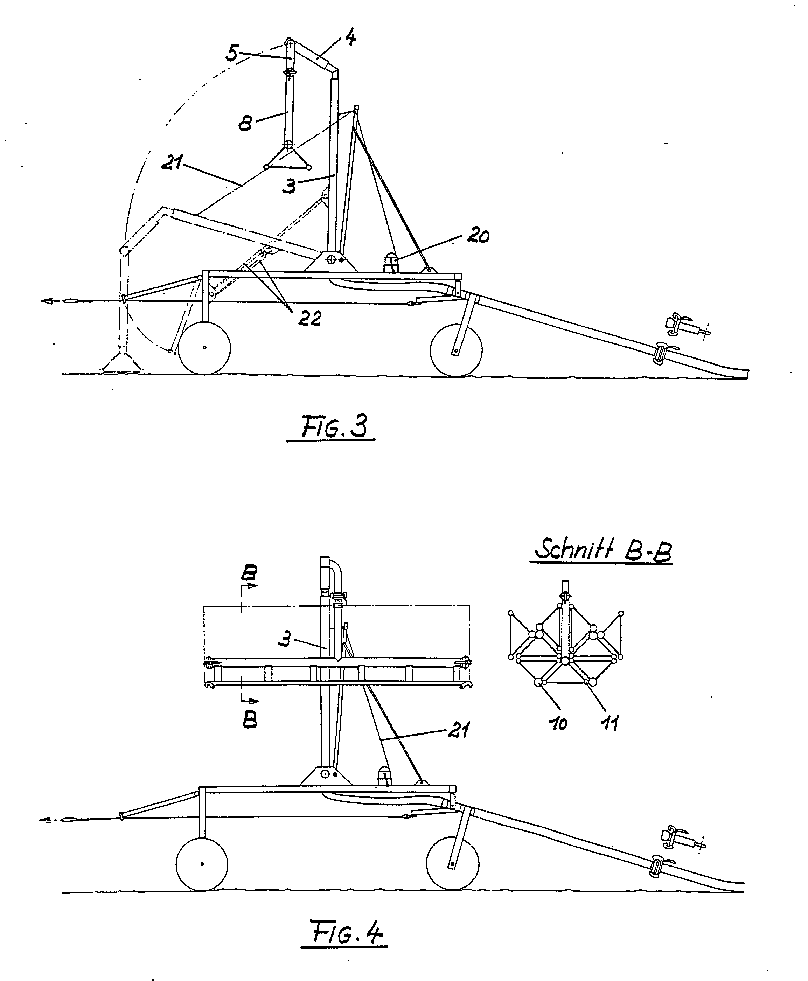

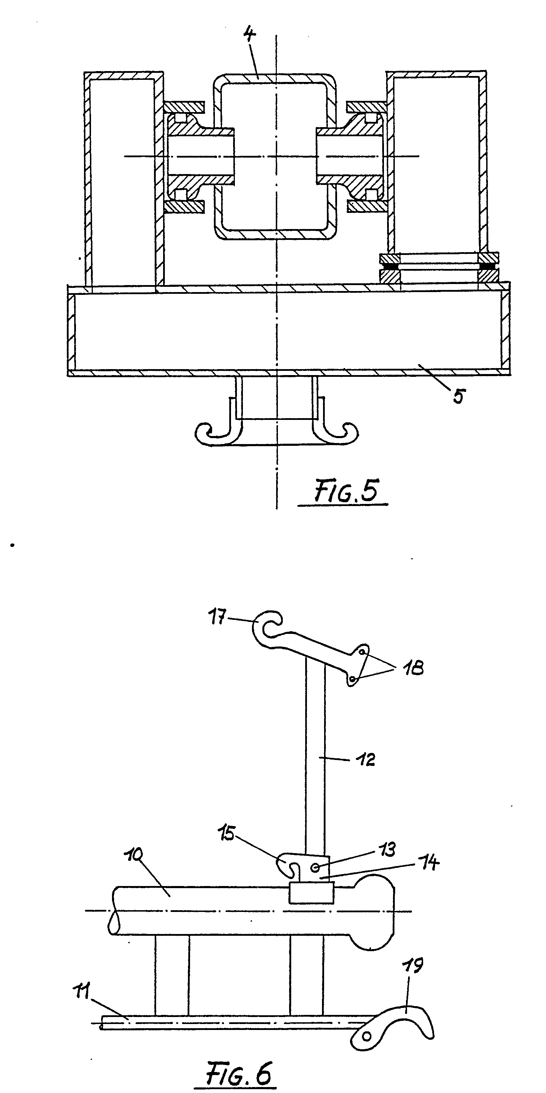

Die Erfindung wird im folgenden an Hand von Ausführungsbeispielen unter Zuhilfenahme der angeschlossenen Zeichnung näher beschrieben. Es zeigen Fig.1a die Seitenansicht des erfindungsgemäßen Auslegersystems; Fig.1b einen Teil des Auslegers nach Fig.1a; Fig.2a das erfindungsgemäße Auslegersystem in Transportstellung; Fig.2b einen Schnitt entlang der Linie A-A in Fig.2a; Fig.3 das erfindungsgemäße Auslegersystem auf einem anderen fahrbaren Wagen angeordnet; Fig.4 die Ausführung nach Fig.3 in Transportstellung; Fig.5 einen Schnitt durch den Galgen des Auslegersystems und Fig.6 eine Detailansicht des Fachwerks in vergrößerter Darstellung. Auf einem mit einer wasserführenden Rohrleitung (2) verbundenen Wagen (1) ist eine direkt an die Wasserzuführung angeschlossene, mehrteilige Trägereinrichtung angeordnet. Diese Trägereinrichtung ist als Hohlprofil ausgebildet und besteht aus einem in Fahrtrichtung schwenkbaren Steher (3), an welchem ein in Fahrtrichtung leicht nach oben gerichteter erster Teil (4) eines Galgens angeordnet ist, der um die Kranachse drehbar ist. Dieser erste wasserführende Teil (4) wird von einem U-förmigen, aus Formrohren gebildeten zweiten Teil (5) des Galgens umfaßt und ist mit ihm über Lager verbunden, wobei das Wasser vom ersten Teil (4) über die Lager in den zweiten Teil (5) fließen kann. Diese beiden den Galgen bildenden Teile haben die Funktion einer Pendeleinrichtung. Bei dieser Einrichtung treten nur geringe Kräfte am Lager auf. Der U-förmige Teil (5) trägt an seiner Unterseite eine Schnellkupplung zum Anschluß an den Mittelteil (6) des Auslegers (Fig.5).

Der Ausleger selbst besteht aus einem Mittelteil (6) und mehreren beiderseits an ihn angeschlossenen Teilab schnitten (7). Die Länge dieser Abschnitte beträgt etwa 6 m. Der Mittelteil (6) umfaßt ein mit einer Schnellkupplung versehenes senkrechtes Rohr (8), welches an den U-förmigen Teil (5) anschließbar ist. Das Rohr (8) mündet in das senkrecht dazu angeordnete, wasserführende Rohr (9), welches an beiden Enden mit einer Schnellkupplung zum Anschluß an die Regnerdüsen tragenden Teilabschnitte (7) des Auslegers versehen ist. Sowohl die Rohre (10) als auch das Rohr (9) sind über Verstrebungen mit zwei unterhalb und seitlich zu ihnen parallel verlaufenden Fachwerkstäben (11) verbunden, wodurch ein dreicekförmiges, einen Windverband darstellendes Fachwerk gebildet ist.Die Rohre (10) der mit dem Mittelteil den Ausleger bildenden Teilabschnitte (7) sind in ihrem oberen äußeren Bereich mit je einem Druckstab (12) versehen, der um eine Achse (13) in Achsrichtung des Auslegers schwenkbar ist.

Der Druckstab (12) ist am Rohr über einen Befestigungsteil (14) angeordnet, welcher mit einem Haken (15) zur Aufnahme der durch Seile oder Stangen gebildeten Spannelemente (16) versehen ist. An seinem anderen, in Arbeitsstellung nach oben weisenden Ende ist am Druckstab (12) ein einen Haken (17) und zwei in einem Bauelement angeordneten, in den Haken (15, 17) entgegengesetzter Richtung weisenden Ösen (18) angeordnet. Der Haken (17) und die Ösen (18) dienen ebenfalls zur Verbindung mit den Spannelementen (16). Das den Haken (17) und die Ösen (18) aufweisende Element ist in Richtung der Außenseite des Auslegers leicht nach unten geneigt angeordnet, um sowohl eine Verbindung zwischen einer Öse (18) und einem Haken (15) als auch einem Haken (17) des nächsten äußeren Teilabschnittes (7) des Auslegers zu ermöglichen.

Als diese Verbindungen herstellende Spannelemente (16) werden vor allem bei großen Auslegerlängen zur Ausschaltung einer möglicherweise auftretenden Seildehnung Kunststoffstangen verwendet. Dies ist zur Aufrechterhaltung einer Lagenkonstanz des Auslegers auch erforderlich.

Die wasserführenden Rohre (9, 10) werden über Schnellkupplungen, die Fachwerkstäbe (11) mittels an je einem ihrer Enden angeordneten, schwenkbaren Haken (19) mitsammen verbunden.

Das Fachwerk kann auf Grund seiner einfachen Bauweise am Boden liegend zusammengebaut werden und wird anschließend an die Schnellkupplung des zum Boden geneigten Kranarmes angekuppelt (Fig.1a, strichlierte Ausführung). Anschließend wird der Ausleger hochgehoben, wobei der Steher (3) der Trägereinrichtung über eine von einer Seilwinde (20) betätigbare Seilkonstruktion (21) bewegt oder von einer Hydraulikanordnung (22) mit Hubzylinder gestützt bzw. gehoben werden kann.

Der Ausleger ist also auf einfache Weise höhenverstellbar und kann auch in sehr großen Höhen, beispielsweise zum Bewässern oder Waschen von Früchten aller Art (Obstbäume, Bananenkulturen usw.) von oben verwendet werden.

Auf Grund der dreieckförmigen Fachwerkausbildung des Auslegers und der einfach zu manipulierenden Auslegerelemente können diese zum Transport um den Mittelteil (6) herum in einer dichten Packung angeordnet werden (Fig.2b). Die Zugstäbe (12) sind dabei umgeklappt. Wie im Schnittbild der Fig.2b gezeigt, liegt dabei je eine Dreiecksseite des Fachwerkes eines Elementes an einer Seite eines anderen Elementes an.

Das Zusammenstapeln der Elemente erfolgt am Boden. Die Anordnung wird dann mit der Trägereinrichtung hochgehoben, anschließend um 90° aus der Arbeitsstellung in Fahrtrichtung geschwenkt und kann so leicht verfahren werden (Fig.2a). Durch die Verwendung der wasserführenden Trägereinrichtung sind keine flexiblen Schlauchverbindungen notwendig, woraus eine wesentliche Erhöhung der Betriebssicherheit resultiert. In den Fig.3 und 4 ist das Auslegersystem auf einem von den Fig.1 und 2 unterschiedlichen fahrbaren Wagen angeordnet dargestellt.

**Ansprüche**

1. Auslegersystem zum Bewässern großer Flächen, mit einem fahrbaren, mit einer Wasserzuleitung versehenen Wagen oder Stativ und einer Trägereinrichtung für den Ausleger, dadurch gekennzeichnet, daß die Trägereinrichtung einen auf dem Wagen (1) oder Stativ in Fahrtrichtung schwenkbar angeordneten Steher (3) und einen mit diesem verbundenen, an den Mittelteil (6) des Auslegers anschließbaren Galgen (4, 5) umfaßt, daß die Trägereinrichtung aus Hohlprofilen zur Wasserführung besteht, daß der Galgen (4, 5) mit dem Steher (3) gelenkig um dessen Achse drehbar verbunden ist, daß der Galgen zweiteilig ausgeführt ist und einen in Fahrtrichtung nach oben gerichteten, um die Achse des Stehers drehbaren ersten Teil (4) und einen mit diesem gelenkig verbundenen, zum Boden weisenden zweiten Teil (5) umfaßt, daß der Ausleger, wie an sich bekannt, aus mehreren untereinander verbundenen, Regnerdüsen tragenden Teilabschnitten besteht, daß die Teilabschnitte miteinander und mit dem Mittelteil (6) über Schnellkupplungen verbunden sind, und daß jeder Teilabschnitt (7) mit einem in Arbeitsstellung nach oben weisenden, in Richtung der Auslegerachse umklappbaren Druckstab (12) versehen ist, der zur Aufnahme von Spannelementen (16) des Auslegers dient.

2. Auslegersystem nach Anspruch 1, dadurch gekennzeichnet, daß der Mittelteil (6) des Auslegers aus einem an den Galgen (4, 5) ankuppelbaren, wasserführenden, senkrechten Rohr (8) und einem mit diesem verbundenen und zu beiden Seiten senkrecht dazu verlaufenden wasserführenden Rohrabschnitt (9) besteht.

3. Auslegersystem nach Anspruch 2, dadurch gekennzeichnet, daß jeder Rohrabschnitt (9) mit zwei unterhalb und seitlich zu ihm verlaufenden Fachwerkstäben (11) über Verstrebungen verbunden ist, wodurch ein dreieckförmiges Fachwerk gebildet ist.

4. Auslegersystem nach den Ansprüchen 1 bis 3, dadurch gekennzeichnet, daß der Mittelteil (6) an seinen beiden horizontal liegenden Enden mit je einer Schnellkupplung und je einem an der Oberseite des Fachwerkes angeordneten, in Achs richtung des Auslegers kippbaren Druckstab (12) versehen ist.

5. Auslegersystem nach Anspruch 1, dadurch gekennzeichnet, daß jeder Druckstab (12) eines Teilabschnittes (7) mit seinen benachbarten Druckstäben und mit dem äußeren Endabschnitt des nächsten äußeren Teilabschnittes durch Spannelemente (16) verspannt ist.

6. Auslegersystem nach den Ansprüchen 1 bis 5, dadurch gekennzeichnet, daß das senkrechte Rohr (8) des Mittelteiles (6) im Bereich des Galgens (4, 5) mit den beiden äußeren Enden des Mittelteils und mit den oberen Enden der Druckstäbe (12) verspannt ist.

7. Auslegersystem nach Anspruch 1, dadurch gekennzeichnet, daß die Spannelemente (16) Seile sind.

8. Auslegersystem nach Anspruch 1, dadurch gekennzeichnet, daß die Spannelemente (16) Zugstangen sind.

9. Auslegersystem nach Anspruch 8, dadurch gekennzeichnet, daß die Zugstangen aus Kunststoff sind.

10. Auslegersystem nach Anspruch 3, dadurch gekennzeichnet, daß jeder Fachwerkstab (11) an jedem Ende mit einem Haken (19) versehen ist.

11. Auslegersystem nach den Ansprüchen 1 und 3, dadurch gekennzeichnet, daß jeder Druckstab (12) in seinem am wasserführenden Rohr angeordneten Bereich mit einem Haken (15) und in seinem oberen Bereich mit einem zur Mitte des Auslegers weisenden Haken (17) und einem zum Rand des Auslegers zeigenden, zwei Ösen (18) aufweisenden Teil zur Aufnahme der Spannelemente (16) versehen ist.

12. Auslegersystem nach Anspruch 1, dadurch gekennzeichnet, daß der Steher (3) über eine Seilkonstruktion (21) mittels einer Seilwinde (20) kippbar ist.

13. Auslegersystem nach Anspruch 1, dadurch gekennzeichnet, daß zwischen dem Steher (3) und dem fahrbaren Wagen (1) eine Hydraulikanordnung (22) vorgesehen ist.

14. Auslegersystem nach Anspruch 12, dadurch gekennzeichnet, daß die Seilwinde (20) am fahrbaren Wagen (1) oder Stativ angeordnet ist.

15. Auslegersystem nach Anspruch 1, dadurch gekennzeich net, daß die Abschnitte des zerlegten Auslegers zum Transport im Bereich des Mittelteils (6) in einer dichten Packung anordenbar sind.

FIG.1a

FIG.1b

EP 0 391 889 A1

A

A

6

1

*FIG.2a*

10

8

11

*Schnitt A-A*

*FIG.2b*

EP 0 391 889 A1

FIG. 3

FIG. 4

Schnitt B-B

_FIG.5_

_FIG.6_

Europäisches
Patentamt

**EUROPÄISCHER RECHERCHENBERICHT**

Nummer der Anmeldung

EP 90890105.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | AT - B - 385 392 (UNGER) * Ansprüche 2,4,5; Seite 5, Zeilen 11-16 * -- | 1,13, 15 | A 01 G 25/09 |
| A | AT - B - 377 897 (RÖHREN- UND PUMPENWERK RUDOLF BAUER GMBH) * Fig. * -- | 1,7 | |
| D,A | DE - A - 1 782 190 (CLEANACRES LTD.) * Fig. 6 * -- | 1 | |
| A | DE - B - 1 028 380 (MAUSER KG) * Gesamt * -- | 1 | |
| A | GB - A - 2 151 891 (KNIGHT) * Fig. 1; Zusammenfassung * -- | 1 | |
| A | AT - B - 382 288 (RÖHREN- UND PUMPENWERK RUDOLF BAUER GMBH) ---- | | |

**RECHERCHIERTE SACHGEBIETE (Int. Cl⁵)**

A 01 G
A 01 M
B 05 B

Der vorliegende Recherchenbericht wurde für alle Patentansprüche erstellt.

| Recherchenort | Abschlußdatum der Recherche | Prüfer |
|---|---|---|
| WIEN | 21-06-1990 | FESSLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82